# EUROPEAN PATENT APPLICATION

(11) **EP 3 620 405 A1**
(43) Date of publication of application: **11.03.2020**
(21) Application number: 17800351.3
(22) Date of filing: 19.05.2017
(51) Int. Cl.: B65F 1/16

(54) **TRASH CAN HAVING SENSING FLIP LID HAVING SETTABLE SENSING DISTANCE AND CONTROL METHOD THEREFOR**

(30) Priority: 04.05.2017 CN 201710309082
(71) Applicant: Fujian Nashida Electronic Incorporated Company, Fuzhou, Fujian 350119 (CN)
(72) Inventor: WANG, Xin, Fuzhou Fujian 350119 (CN); CHEN, Jiangqun, Fuzhou Fujian 350119 (CN); LIN, Zhou, Fuzhou Fujian 350119 (CN)
(74) Representative: Kayahan, Senem
(86) International application number: PCT/CN2017/085027
(87) International publication number: WO 2018/201528

(57) **Abstract**

The invention provides with an induction clamshell-type garbage can which can set the sensing distance and its control method, including infrared transmitter, infrared receiving tube, amplifier, analog-to-digital converter, analog-to-digital conversion result register, register of standard sensing distance, setting sensing distance register, comparative procedure, microcomputer program control unit, setting button, drive circuit, electrical machine, reducer, cover and induction window.The invention can adjust the height of sensing distance in accordance with the requirements of users and satisfy the requirements of personalized market. At the same time, comparison mode of analog voltage signal is changed to digital comparison mode. The circuit is not easy to be disturbed and the circuit is relatively stable.

## Description

### Field of Technology

The invention involves the design field of intelligent garbage can, especially a n induction clamshell-type garbage can which can set the sensing distance and its control method.

### Background Technology

Active infrared induction clamshell-type garbage can of existing technology and its working principle: infrared LED lamp set under the induction window launches infrared signal to the upward side of induction window; when barriers enter into a certain distance of upward side of induction window, infrared signal is reflected and weak signal is received by infrared receiving tube set under the induction window; analog signal after amplification through amplifier compares with analog reference value of comparator, if analog signal after amplification through amplifier is less than analog reference value of comparator, output of comparator is low and the cover is not opened; if analog signal after amplification through amplifier is more than analog reference value of comparator, output of comparator is high. Microcomputer control chip is touched to skip to procedure for opening the cover; outlet of microcomputer control chip controls drive circuit to drive the electrical machine and electrical machine drives rotation of reducer to open the cover. If the distance between barrier and induction window is more than critical sensing distance, the sensor is not touched; if the distance between barrier and induction window is less than critical sensing distance, sensor is touched, which is referred to as critical sensing distance in industry and sensing distance for short.

At present, the sensing distance of active infrared induction clamshell-type garbage can in the market cannot be adjusted. In general, sensing distance tested by palm is about 20cm. As the operating environment of induction clamshell-type garbage can is different, many people set the induction clamshell-type garbage can under the table-board, which causes the induction clamshell-type garbage can not to be used in the state of sensing all the time. At the same time, requirements of personalized use are different. Some people think that high sensing distance is comparatively sensitive and some people think that low sensing distance is not easy to cause false operation; therefore, induction clamshell-type garbage can with adjustable sensing distance will satisfy the personalized requirements. At the same time, existing technology adopts analog voltage signal to make a comparison, which is easy to be disturbed and is not stable in circuit.

### Content of Invention

In light of the foregoing, the purpose of the invention is proposing An control method for an induction clamshell-type garbage can which can set the sensing distance and its control method, the invention can adjust the height of sensing distance in accordance with the requirements of users and satisfy the requirements of personalized market. At the same time, comparison mode of analog voltage signal is changed to digital comparison mode. Circuit is not easy to be disturbed and is relatively stable.

The invention adopts the following scheme: An control method for an induction clamshell-type garbage can which can set the sensing distance, including infrared transmitter, infrared receiving tube, amplifier, analog-to-digital converter, analog-to-digital conversion result register, register of standard sensing distance, setting sensing distance register, comparative procedure, microcomputer program control unit, setting button, drive circuit, electrical machine, reducer, cover and induction window; amplifier includes amplifier chip and its peripheral RC element; amplifier chip, analog-to-digital converter, analog-to-digital conversion result register, register of standard sensing distance, setting sensing distance register, comparative procedure and microcomputer program control unit are all integrated in a microcomputer control chip; infrared transmitter and infrared receiving tube are set under the induction window;
The microcomputer control chip includes the first port 3A, the second port 3B, the third port 3C and the fourth port 3D; the first port 3A connects with the infrared transmitter, the third port 3C connects with the drive circuit, the second port 3B connects with the infrared receiving tube and the fourth port 3D connects with the setting button; the drive circuit connects to the cover sequentially through electrical machine and reducer in order to drive cover to carry out the flipping action; the infrared receiving tube connects to the comparative procedure sequentially through the amplifier, analog-to-digital converter, analog-to-digital conversion result register, and the comparative procedure also connects with the standard sensing distance register and setting sensing distance register; the microcomputer procedure control unit also connects with the infrared transmitter, drive circuit, setting button, setting sensing distance register, standard sensing distance register, comparative procedure, analog-to-digital conversion result register and analog-to-digital converter;
Under the condition that sensing distance is not set, the sensing distance shall be the standard sensing distance, and comparative procedure makes the cover to be open by comparing the value of analog-to-digital conversion result register with the value of the standard sensing distance register; when the value of analog-to-digital conversion result register is less than the value of standard sensing distance register, the cover is not open; when the value of analog-to-digital conversion result register is greater than the value of standard sensing distance register, the cover is open; if it is necessary to set sensing distance, press the setting button, put the palm on the induction zone above the induction window and adjust the distance from the palm to the induction window. When the procedure comes into the setting mode, read the current data of sensing distance and save the current data into the setting sensing distance register. In the later process of usage, the saved sensing distance shall be the setting sensing distance, and comparative procedure makes the cover to be open by comparing the value of analog-to-digital conversion result register and setting sensing distance register; when the value of analog-to-digital conversion result register is less than the value of setting sensing distance register, the cover is not open; when the value of analog-to-digital conversion result register is greater than the value of setting sensing distance register, the cover is open.

The circuit of better induction clamshell-type garbage can of the existing technology consists of two chips and the peripheral resistor-capacitor units, and the two chips are respectively amplifier chip and microcomputer control chip. Moreover, its circuit is not simple enough, the circuit board has many welded components, and the cost is high. This invention adopts the circuit of induction clamshell-type garbage can of the single chip number value has many advantages, such as simple circuit, less bonding pads, low processing cost, low failure rate, small circuit board and low cost.

Moreover, before the microcomputer control chip is powered on, if the setting button is not pressed, in the later process of usage, the sensing distance will be the standard sensing distance; if the setting button is pressed, microcomputer control chip comes into the setting mode after it is powered on, after the end of the setting mode running, in the later process of usage, the sensing distance shall be the setting sensing distance. There are two advantages to judge whether or not to set the sensing distance when the microcomputer control chip is powered on. The one is that setting button can be used for other purposes after it is powered on, such as the normal uncovering function button and manual closing button; the other is that, for customers who do not need to set the sensing distance or do not read the instructions, the operation and use of the products are no different from the original product and it is not easy to cause confusion during use. Of course, a single setting button can be added to the induced circuit based on the original technology for adjusting the sensing distance, but this method is easy to cause the incorrect operation of the consumers.

Furthermore, the microcomputer control chip still includes a R20 register, and the R20 register connects with the standard sensing distance register, setting sensing distance register and comparative procedure, so as to temporarily store the value of the standard sensing distance register or the value of the setting sensing distance register, and then comparing them with the value of analog-to-digital conversion result register through comparative procedure.

This implementation also provides a control method for an induction clamshell-type garbage can, which can be used to set sensing distance, based on the above description, and the following steps are included:
Step S1: After the microcomputer control chip is powered on, judge whether it is power on operation or wake-up reset operation now. If it is power on operation, enter step S2; if it is wake-up reset operation, enter step S5;
Step S2: After the procedure is initialized, set the first port 3A of microcomputer control chip as the output port, and control infrared transmitter not to transmit the infrared ray; set the second port 3B as the analog input port of amplifier; set the third port 3C as the output port and control the drive circuit not to work; set the fourth port 3D as the input port and pull it up;
Step S3: Determine whether the setting button is pressed, and if not, since the pull-up is at a high level, the fourth port 3D of microcomputer control chip enters step S4; If pressed, the fourth port 3D is at a low level, and the procedure enters the setting pattern. Enter the step S13;
Step S4: Assign the value of the standard sensing distance register to a R20 register, and enter step S5;
Step S5: The first port 3A of microcomputer control chip outputs a pulse signal, and control infrared transmitter transmits an infrared pulse signal to the induction zone, and enter step S6;
Step S6: The reflected signal is received by the infrared receiving tube, after the analog signal is amplified by the amplifier, the analog-to-digital converter will conduct the analog-to-digital conversion, and enter step S7;
Step S7: The analog-to-digital conversion result of the current analog-to-digital converter is deposited into the analog-to-digital conversion result register, and enter step S8;
Step S8: Compare the value of the analog-to-digital conversion result register with the value of the R20 register, if the value of the analog-to-digital conversion result register is less than the value of the R20 register, enter step S9; if the value of the analog-to-digital conversion result register is greater than the value of the R20 register, enter step S10;
Step S9: Microcomputer control chip enters sleep power-saving state 300mS, and return to step S1 after awakened by watchdog;
Step S10: Microcomputer control chip controls drive circuit to rotate the electrical machine in the forward direction through the third port 3C, and the electrical machine drives reducer to open the cover, and enter step S11;
Step S11: The microcomputer control chip controls the drive circuit to stop the electrical machine by the third port 3C, and remain the open state for 3 seconds, and enter step S12;
Step S12: Microcomputer control chip controls drive circuit to rotate the electrical machine in the reverse direction through the third port 3C, and the electrical machine drives reducer to close the cover, and return to step S9;
Step S13: Enter the setting mode: The operator places the palm over the sensing window within induction zone, adjusts the distance from the palm to the sensing window to the sensing distance and maintains a stable state. At the same time, the other hand pressing the setting button is ready to be loosened, and enter step S14;
Step S14: The procedure uninterruptedly determines whether the setting button is released, if the procedure is still pressed, then continue to conduct step S14; If the setting button has been released, enter step S15;
Step S15: The first port 3A of microcomputer control chip outputs a pulse signal, and control infrared transmitter transmits an infrared pulse signal to the induction zone, and enter step S16;
Step S16: The signal reflected by the palm is received by the infrared receiving tube, after the analog signal is amplified by the amplifier, the analog-to-digital converter will conduct the analog-to-digital conversion, and enter step S17;
Step S17: The analog-to-digital conversion result of analog-digital converter is deposited into R20 register, and return to step S5, exit the setting mode and enter the normal usage mode.

In particular, if passing the setting step, the data of the R20 register is the setting sensing distance value, and at this point, the R20 register is the setting sense register described in the claim book. If the start-up does not pass the setting mode, the value of the standard sensing distance register is given to the R20 register. In the subsequent use, the R20 register is the standard sensing distance register described in the claim book.

Compared with existing technology, the invention has the following beneficial effects: through the design of the invention, users can adjust the height of sensing distance in accordance with their own demands and requirements of operating environment; it can satisfy the requirements of personalized market; at the same time, comparison mode of analog voltage signal is changed to digital comparison mode; circuit is not easy to be disturbed and circuit is relatively stable; the whole circuit only has one integrated IC circuit, which is concise, reliable, easy to process and has low failure rate and low cost.

### Introduction of Figures

Fig. 1 is the schematic circuit diagram in example of the invention;
Fig. 2 is the block diagram of control method in example of the invention.

Fig. 3 is the schematic circuit diagram of amplifier in example of the invention.

In the figures: 1- infrared transmitter, 2- infrared receiving tube, 3-microcomputer control chip, 31- amplifier, 32- analog-to-digital converter, 33-analog-to-digital conversion result register, 34- comparative procedure, 35- setting sensing distance register, 36- register of standard sensing distance, 37- microcomputer program control unit, 3A- output control port which infrared transmitter launches infrared ray pulse signal controlled by microcomputer control chip (first port), 3B- input port of analog signal of amplifier (second port), 3C- output port group of drive circuit controlled by microcomputer control chip (third port), 3D- input port connected by microcomputer control chip and button switch (fourth port), 4-drive circuit, 5- electrical machine, 6- reducer, 7- cover, 8- setting button, 9-induction window, 10- induction zone, OP- chip of amplifier, R1∼R6 resistance of circuit of amplifier, C1∼C4 capacitance of circuit of amplifier.

### Specific Implementation Methods

Make further explanation for this invention by combining with the following attached drawings and implementations.

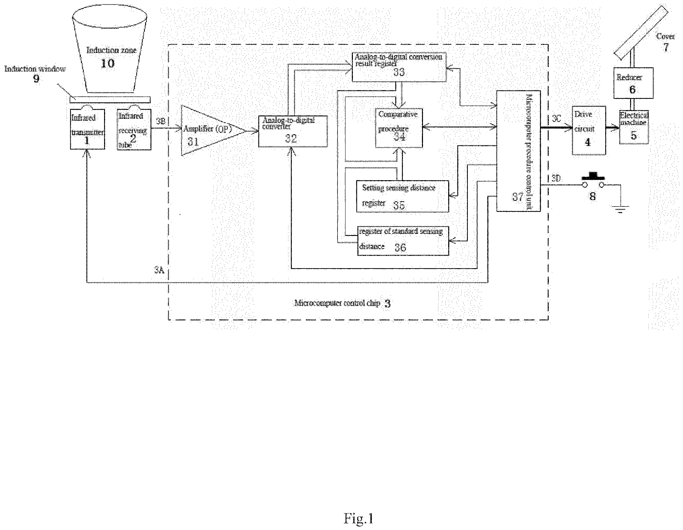

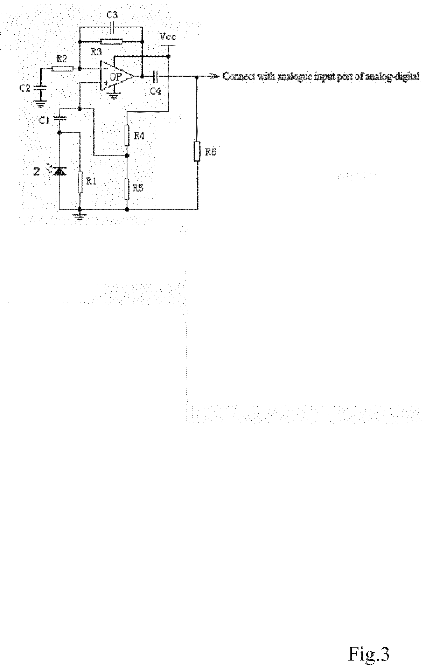

As shown in Fig. 1, this invention adopts the following scheme: an induction clamshell-type garbage can which the sensing distance can be set, including infrared transmitter1, infrared receiving tube 2, amplifier 31, analog-to-digital converter 32, analog-to-digital conversion result register 33, register 36 of standard sensing distance, setting sensing distance register35, comparative procedure 34, microcomputer program control unit37, setting button 8, drive circuit 4, electrical machine 5, reducer 6, cover 7 and induction window 9; induction zone 10, amplifier includes amplifier chip and its peripheral RC element; amplifier chip, analog-to-digital converter, analog-to-digital conversion result register, register of standard sensing distance, setting sensing distance register, comparative procedure and microcomputer program control unit are all integrated in one microcomputer control chip; infrared transmitter and infrared receiving tube are set under the induction window;
As shown in Fig. 3, amplifier 31 consists of amplifier chip (OP), resistance R1∼R6 and capacitance C1∼C4. This implementation integrates the devices into a microcomputer control chip 3, such as amplifier chip (OP), analog-to-digital converter 32, analog-to-digital conversion result register 33, standard sensing distance register 36, setting sensing distance register 35, comparative procedure 34 and microcomputer procedure control unit 37. The circuit of induction clamshell-type garbage can of the existing technology consists of two chips and the peripheral resistor-capacitor units, and the two chips are respectively amplifier chip and microcomputer control chip. Moreover, its circuit is not simple enough, the circuit board has many welded components, and the cost is high. The circuit of induction clamshell-type garbage can of the single chip number value has many advantages, such as simple circuit, less bonding pads, low processing cost, low failure rate, small circuit board and low cost.

The microcomputer control chip includes the first port 3A, the second port 3B, the third port 3C and the fourth port 3D; the first port 3A connects with the infrared transmitter 1, the third port 3C connects with the drive circuit 4, the second port 3B connects with the infrared receiving tube 2 and the fourth port 3D connects with the setting button 8; the drive circuit 4 connects to the cover 7 sequentially through electrical machine 5 and reducer 6 in order to drive cover 7 to carry out the flipping action; the infrared receiving tube 2 connects to the comparative procedure 34 sequentially through the amplifier 31, analog-to-digital converter 32, analog-to-digital conversion result register 33, and the comparative procedure 34 also connects with the standard sensing distance register 36 and setting sensing distance register 35; the microcomputer procedure control unit 37 also connects with the infrared transmitter 1, drive circuit 4, setting button 8, setting sensing distance register 35, standard sensing distance register 36, comparative procedure 34, analog-to-digital conversion result register 33 and analog-to-digital converter 32;
Under the condition that sensing distance is not set, the sensing distance shall be the standard sensing distance, and comparative procedure 34 makes the cover to be open 7 by comparing the value of analog-to-digital conversion result register 33 with standard sensing distance register 36; when the value of analog-to-digital conversion result register 33 is less than the value of standard sensing distance register 36, the cover 7 is not open; when the value of analog-to-digital conversion result register 33 is greater than the value of standard sensing distance register 36, the cover 7 is open; if it is necessary to set sensing distance, press the setting button 8, put the palm on the induction zone 10 above the induction window 9 and adjust the distance from the palm to the induction window 9. When the procedure comes into the setting mode, read the current data of sensing distance and save the data into setting sensing distance register 35. In the later process of usage, the sensing distance shall be the setting sensing distance, and comparative procedure 34 makes the cover to be open 7 by comparing the value of analog-to-digital conversion result register 33 with setting sensing distance register 35; when the value of analog-to-digital conversion result register 33 is less than the value of setting sensing distance register 35, the cover 7 is not open; when the value of analog-to-digital conversion result register 33 is greater than the value of s setting sensing distance register 35, the cover 7 is open.

The better, in this implementation, the circuit of induction clamshell-type garbage can of the existing technology consists of two chips and the peripheral resistor-capacitor units, and the two chips are respectively amplifier chip and microcomputer control chip. Moreover, its circuit is not simple enough, the circuit board has many welded components, and the cost is high. This invention adopts the circuit of induction clamshell-type garbage can of the single chip number value has many advantages, such as simple circuit, less bonding pads, low processing cost, low failure rate, small circuit board and low cost.

In this implementation, before the microcomputer control chip 3 is powered on, if the setting button 8 is not pressed, in the later process of usage, the sensing distance shall be the standard sensing distance (the standard sensing distance shall be set by the manufacturer and the user shall not change); if the setting button 8 is pressed, microcomputer control chip 3 comes into the setting mode after it is powered on, after the end of the setting mode running, in the later process of usage, the sensing distance shall be the setting sensing distance. There are two advantages to judge whether or not to set the sensing distance when the microcomputer control chip 3 is powered on. The one is that setting button 8 can be used for other purposes after it is powered on, such as the normal uncovering function button and manual closing button; the other is that, for customers who do not need to set the sensing distance or do not read the instructions, the operation and use of the products are no different from the original product and it is not easy to cause confusion during use. Of course, a single setting button can be added to the induced circuit based on the original technology for adjusting the sensing distance, but this method is easy to cause the incorrect operation of the consumers.

In this implementation, the microcomputer control chip 3 still includes a R20 register, and the R20 register connects with the standard sensing distance register 36, setting sensing distance register 35 and comparative procedure 34, so as to temporarily store the value of the standard sensing distance register 36 or the value of the setting sensing distance register 35, and then comparing them with the value of analog-to-digital conversion result register 33 through comparative procedure 34.

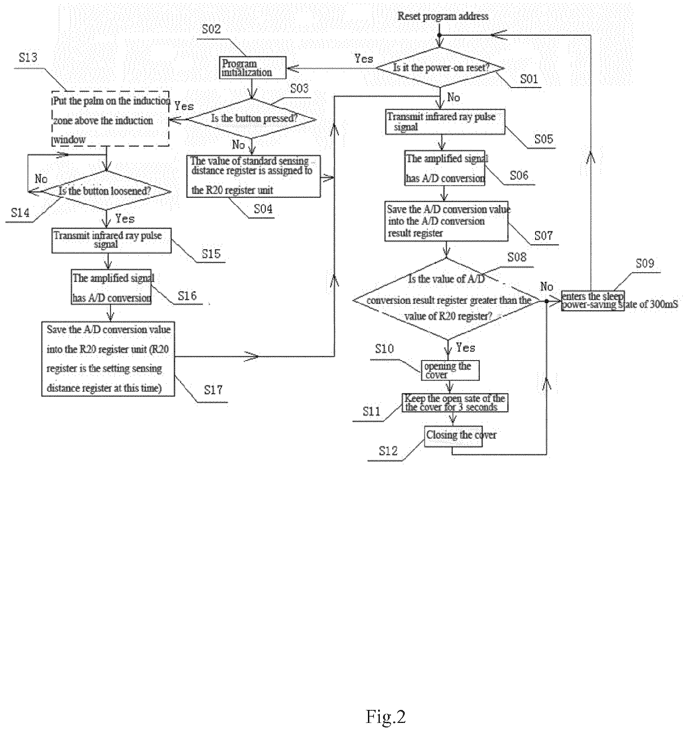

As shown in Fig. 2, this implementation also provides a control method for an induction clamshell-type garbage can, which can be used to set sensing distance, based on the above description, and the following steps are included:
Step S1: After the microcomputer control chip 3 is powered on, judge whether it is power on operation or wake-up reset operation now. If it is power on operation, enter step S2; if it is wake-up reset operation, enter step S5;
Step S2: After the procedure is initialized, set the first port 3A of microcomputer control chip 3 as the output port, and control infrared transmitter 1 not to transmit the infrared ray; set the second port 3B as the analog input port of amplifier; set the third port 3C as the output port and control the drive circuit 4 not to work; set the fourth port 3D as the input port and pull it up;
Step S3: Determine whether the setting button 8 is pressed, and if not pressed, since the pull-up is at a high level, the fourth port 3D of microcomputer control chip 3 enters step S4; If pressed, the fourth port 3D is at a low level, and the procedure enters the setting pattern. Enter the step S13;
Step S4: Assign the value of the standard sensing distance register 36 to a R20 register, and enter step S5;
Step S5: The first port 3A of microcomputer control chip 3 outputs a pulse signal, and control infrared transmitter 1 transmits an infrared pulse signal to the induction zone 10, and enter step S6;
Step S6: The reflected signal is received by the infrared receiving tube 2, after the analog signal is amplified by the amplifier 31, the analog-to-digital converter 32 will conduct the analog-to-digital conversion, and enter step S7;
Step S7: The analog-to-digital conversion result of the current analog-to-digital converter 32 is deposited into the analog-to-digital conversion result register 33, and enter step S8;
Step S8: Compare the value of the analog-to-digital conversion result register 33 with the value of the R20 register, if the value of the analog-to-digital conversion result register 33 is less than the value of the R20 register, enter step S9; if the value of the analog-to-digital conversion result register 33 is greater than the value of the R20 register, enter step S10;
Step S9: Microcomputer control chip 3 enters sleep power-saving state 300mS, and return to step S1 after awakened by watchdog;
Step S10: Microcomputer control chip 3 controls drive circuit 4 to rotate the electrical machine 5 in the forward direction through the third port 3C, and the electrical machine 5 drives reducer 6 to open the cover 7, and enter step S11;
Step S11: The microcomputer control chip 3 controls the drive circuit 4 to stop the electrical machine 5 by the third port 3C, and remain the open state for 3 seconds, and enter step S12;
Step S12: Microcomputer control chip 3 controls drive circuit 4 to rotate the electrical machine 5 in the reverse direction through the third port 3C, and the electrical machine 5 drives reducer 6 to close the cover 7, and return to step S9;
Step S13: Enter the setting mode: The operator places the palm over the sensing window 9 within induction zone 10, adjusts the distance from the palm to the sensing window 9 to the sensing distance and maintains a stable state. At the same time, the other hand pressing the setting button 8 is ready to be loosened, and enter step S14; Step S14: The procedure uninterruptedly determines whether the setting button 8 is released, if the procedure is still pressed, then continue to conduct step S14; If the setting button has been released, enter step S15;
Step S15: The first port 3A of microcomputer control chip 3 outputs a pulse signal, and control infrared transmitter 1 transmits an infrared pulse signal to the induction zone 10, and enter step S16;
Step S16: The signal reflected by the palm is received by the infrared receiving tube 2, after the analog signal is amplified by the amplifier 31, the analog-to-digital converter 32 will conduct the analog-to-digital conversion, and enter step S17;
Step S17: The analog-to-digital conversion result of analog-digital converter 32 is deposited into R20 register, and return step S5, exit the setting mode and enter the normal usage mode.

In particular, in this implementation, if passing the setting step, the data of the R20 register is the setting sensing distance value, and at this point, the R20 register is the setting sense register described in the claim book. If the start-up does not pass the setting mode, the value of the standard sensing distance register is given to the R20 register. In the subsequent use, the R20 register is the standard sensing distance register described in the claim book.

The above mentioned is only the better implementation of the invention, any equal change and modification in the scope of invention application patent shall be subject to the scope of the invention.

## Claims

1. An induction clamshell-type garbage can which can set the sensing distance, **characterized in that**: including infrared transmitter, infrared receiving tube, amplifier, analog-to-digital converter, analog-to-digital conversion result register, register of standard sensing distance, setting sensing distance register, comparative procedure, microcomputer program control unit, setting button, drive circuit, electrical machine, reducer, cover and induction window; the amplifier includes amplifier chip and its peripheral RC element; the amplifier chip, the analog-to-digital converter, the analog-to-digital conversion result register, the register of standard sensing distance, the setting sensing distance register, the comparative procedure and the microcomputer program control unit are all integrated in a microcomputer control chip; the infrared transmitter and the infrared receiving tube are set under the induction window;
The microcomputer control chip includes the first port 3A, the second port 3B, the third port 3C and the fourth port 3D; the first port 3A connects with the infrared transmitter, the third port 3C connects with the drive circuit, the second port 3B connects with the infrared receiving tube and the fourth port 3D connects with the setting button; the drive circuit connects to the cover sequentially through the electrical machine and the reducer in order to drive cover to carry out the flipping action; the infrared receiving tube connects to the comparative procedure sequentially through the amplifier, the analog-to-digital converter, the analog-to-digital conversion result register, and the comparative procedure also connects with the standard sensing distance register and the setting sensing distance register; the microcomputer procedure control unit also connects with the infrared transmitter, the drive circuit,the setting button, the setting sensing distance register, the standard sensing distance register, the comparative procedure, the analog-to-digital conversion result register and the analog-to-digital converter;
Under the condition that sensing distance is not be set, the sensing distance shall be the standard sensing distance, and the comparative procedure makes the cover to be open by comparing the value of the analog-to-digital conversion result register with the value of the standard sensing distance register; when the value of the analog-to-digital conversion result register is less than the value of the standard sensing distance register, the cover is not open; when the value of analog-to-digital conversion result register is greater than the value of standard sensing distance register, the cover is open; if it is necessary to set the sensing distance, press the setting button, put the palm on the induction zone above the induction window and adjust the distance from the palm to the induction window; When the procedure comes into the setting mode, read the current data of the sensing distance and save the current data into the setting sensing distance register; In the later process of usage, the saved sensing distance shall be the setting sensing distance, and the comparative procedure makes the cover to be open by comparing the value of the analog-to-digital conversion result register and the setting sensing distance register; when the value of the analog-to-digital conversion result register is less than the value of the setting sensing distance register, the cover is not open; when the value of the analog-to-digital conversion result register is greater than the value of the setting sensing distance register, the cover is open.

2. An induction clamshell-type garbage can which can set the sensing distance according to claim 1, **characterized in that**: before the microcomputer control chip is powered on, if the setting button is not pressed, in the later process of usage, the sensing distance will be the standard sensing distance; if the setting button is pressed, the microcomputer control chip comes into the setting mode after it is powered on, after the end of the setting mode running, in the later process of usage, the sensing distance shall be the setting sensing distance.

3. An induction clamshell-type garbage can which can set the sensing distance according to claim 1, **characterized in that**: the microcomputer control chip still includes a R20 register, and the R20 register connects with the standard sensing distance register, the setting sensing distance register and the comparative procedure, so as to temporarily save the value of the standard sensing distance register or the value of the setting sensing distance register, and then compare the saved value with the value of the analog-to-digital conversion result register by running the comparative procedure.

4. An control method for an induction clamshell-type garbage can which can set the sensing distance according to claim 3, **characterized in that**: including the following steps:
Step S1: After the microcomputer control chip is powered on, judge whether it is power on operation or wake-up reset operation now;If it is power on operation, enter step S2; if it is wake-up reset operation, enter step S5;
Step S2: After the procedure is initialized, set the first port 3A of the microcomputer control chip as the output port, and control the infrared transmitter not to transmit the infrared ray; set the second port 3B as the analog input port of amplifier; set the third port 3C as the output port and control the drive circuit not to work; set the fourth port 3D as the input port and the fourth port 3D has a pull-up;
Step S3: Determine whether the setting button is pressed, and if not, the pull-up makes the fourth port 3D of the microcomputer control chip is at a high level, enters step S4; If being pressed, the fourth port 3D is at a low level, and the procedure enters the setting mode,enter the step S13;
Step S4: Assign the value of the standard sensing distance register to a R20 register, and enter step S5;
Step S5: The first port 3A of the microcomputer control chip outputs a pulse signal, and control the infrared transmitter transmits an infrared pulse signal to the induction zone, and enter step S6;
Step S6: The reflected signal is received by the infrared receiving tube, after the analog signal is amplified by the amplifier, the analog-to-digital converter will conduct the analog-to-digital conversion, and enter step S7;
Step S7: The analog-to-digital conversion result of the current analog-to-digital converter is saved into the analog-to-digital conversion result register, and enter step S8;
Step S8: Compare the value of the analog-to-digital conversion result register with the value of the R20 register, if the value of the analog-to-digital conversion result register is less than the value of the R20 register, enter step S9; if the value of the analog-to-digital conversion result register is greater than the value of the R20 register, enter step S10;
Step S9: The microcomputer control chip enters the sleep power-saving state of 300mS, and return to step S1 after awakened by watchdog;
Step S10: The microcomputer control chip controls the drive circuit to rotate the electrical machine in the forward direction through the third port 3C, and the electrical machine drives reducer to open the cover, and enter step S11;
Step S11: The microcomputer control chip controls the drive circuit to stop the electrical machine by the third port 3C, and the open state of the cover remains for 3 seconds, and enter step S12;
Step S12: The microcomputer control chip controls drive circuit to rotate the electrical machine in the reverse direction through the third port 3C, and the electrical machine drives the reducer to close the cover, and return to step S9;
Step S13: Enter the setting mode: The operator places the palm over the sensing window within the induction zone, adjusts the distance from the palm to the sensing window to the sensing distance and maintains a stable state; At the same time, the
other hand pressing the setting button is ready to be loosened, and enter step S14;
Step S14: The procedure uninterruptedly determines whether the setting button is released, if the procedure is still pressed, then continue to conduct step S14; If the setting button has been released, enter step S15;
Step S15: The first port 3A of the microcomputer control chip outputs a pulse signal, and control the infrared transmitter transmits an infrared pulse signal to the induction zone, and enter step S16;
Step S16: The signal reflected by the palm is received by the infrared receiving tube, after the analog signal is amplified by the amplifier, the analog-to-digital converter will conduct the analog-to-digital conversion, and enter step S17;
Step S17: The analog-to-digital conversion result of the analog-digital converter is saved into the R20 register, and return to step S5, exit the setting mode and enter the normal usage mode.
